Europäisches Patentamt

European Patent Office

Office européen des brevets

(11) Numéro de publication: **0 378 162**
**A1**

## (12) DEMANDE DE BREVET EUROPEEN

(21) Numéro de dépôt: **90100361.6**

(22) Date de dépôt: **09.01.90**

(51) Int. Cl.5: **H02K 21/14, H02P 5/40,**
**H02K 1/27**

(30) Priorité: **11.01.89 FR 8900264**
**02.10.89 FR 8912843**

(43) Date de publication de la demande:
**18.07.90 Bulletin 90/29**

(84) Etats contractants désignés:
**AT BE CH DE DK ES FR GB GR IT LI LU NL SE**

(71) Demandeur: **GEC ALSTHOM SA**
**38, avenue Kléber**
**F-75116 Paris(FR)**

(72) Inventeur: **Gaillard, Gabriel**
**11, rue André Guillaume**
**F-21000 Dijon(FR)**
Inventeur: **Régis, André**
**2 Allée Louis Pergaud**
**F-21240 Talant(FR)**
Inventeur: **Fage, Patrick**
**3A, rue Majnoni d'Intignano**
**F-21121 Fontaine les Dijon(FR)**

(74) Mandataire: **Weinmiller, Jürgen et al**
**Lennéstrasse 9 Postfach 24**
**D-8133 Feldafing(DE)**

(54) **Moteur synchrone adapté pour marcher à puissance constante et commande pour ce moteur.**

(57) Le moteur synchrone à aimants est du type à concentration de flux et comprend un rotor muni d'aimants (5) positionnés radialement avec une direction d'aimantation azimutale. La valeur (R2) de la réluctance offerte au flux (F3) des aimants du coté de l'arbre (6) du moteur est comprise entre 10 fois et 20 fois la valeur de la réluctance (R1) offerte au flux (F1) des aimants du côté de l'entrefer (10) du moteur.

Le moteur synchrone est associé à un capteur (C) mesurant la position de son rotor et à un variateur de puissance se comportant en générateur de courant (VP). Le variateur (VP) est commandé par un microprocesseur (MP) programmé recevant une information de la vitesse désirée du moteur (M), une information de l'écart entre la vitesse actuelle et la vitesse désirée du moteur, une information en provenance dudit capteur et relative à la position du rotor du moteur et une information mémorisée pour permettre un déphasage nul entre le courant I fourni par le variateur de puissance et la différence de potentiel U aux bornes des phases du moteur, ces dispositions permettant de minimiser la puissance installée dans le variateur pour un pilotage à puissance constante du moto-variateur synchrone.

FIG. 2

# FIG. 3

## Moteur synchrone adapté pour marcher à puissance constante et commande pour ce moteur

La présente invention concerne un moteur synchrone adapté pour marcher à puissance constante, dans une large gamme de vitesses.

L'invention concerne également une commande pour ce moteur.

La marche à puissance constante d'un moteur synchrone à aimants a été évoquée dans le document PROCEEDINGS OF THE IEEE vol.70 n° 2 février 1982 NEW-YORK US pages 116-135 ; B.K. BOSE "ADJUSTABLE SPEED AC DRIVES A TECHNOLOGY STATUS REVIEW".

Avec un moteur synchrone, afin d'obtenir une grande plage de fonctionnement à puissance constante, il est nécessaire de recourir à une avance de phase importante.

Avec un moteur synchrone à aimants traditionnel cette avance de phase importante (jusqu'à 90°) conduit pour un moteur fonctionnant à vide à un niveau de courant trop élevé, niveau pouvant dépasser la limite thermique des produits concernés et présenter le risque important de désaimantation des aimants du rotor entraînant des pertes de performances et de fiabilité des machines.

Cette solution entraîne également le choix d'un variateur électronique d'alimentation de puissance installée très importante par rapport à la puissance mécanique obtenue d'où un compromis économique défavorable.

Un but de la présente invention est de réaliser un moteur synchrone pouvant fonctionner à puissance constante dans une gamme de vitesse importante, par exemple comprise entre une fois une vitesse de base $N_0$ donnée et quatre fois cette valeur.

Un autre but de l'invention est de réaliser une commande associée au moteur précédent et telle qu'elle permette d'atteindre les objectifs ci-après :

1/ S'assurer que le courant soit, pour toutes situations possibles, contrôlé et à l'intérieur des limites permises par le moteur.

2/ S'assurer que l'état de magnétisation des aimants du rotor soit préservé c'est-à-dire éviter tous les risques de désaimantation.

3/ Obtenir une valeur minimale des pertes fer du moteur pendant les phases de fonctionnement à sa vitesse maximale.

4/ Optimiser le rapport entre la puissance installée du variateur électronique d'alimentation et la puissance mécanique obtenue sur l'arbre.

Tous ces buts sont atteints par l'invention qui a pour objet un moteur synchrone à aimants du type à concentration de flux, comprenant un rotor muni d'aimants positionnés radialement au sein du rotor avec une direction d'aimantation azimutale, caractérisé en ce que la valeur de la réluctance offerte au flux des aimants du côté de l'arbre du moteur étant comprise entre 10 fois et 20 la valeur de la réluctance offerte au flux des aimants du côté de l'entrefer du moteur.

L'invention a également pour objet une commande pour la marche à puissance constante d'un moteur du type précité, ledit moteur synchrone étant associé à un capteur mesurant la position de son rotor et à un variateur de puissance se comportant en générateur de courant, caractérisée en ce que le variateur est commandé par un microprocesseur programmé recevant une information de la vitesse désirée du moteur, une information de l'écart entre la vitesse actuelle et la vitesse désirée du moteur, une information en provenance dudit capteur et relative à la position du rotor du moteur et une information mémorisée pour permettre un déphasage nul entre le courant I fourni par le variateur de puissance et la différence de potentiel U aux bornes des phases du moteur, ces dispositions permettant de minimiser la puissance installée dans le variateur pour un pilotage à puissance constante du moto-variateur synchrone.

Avantageusement le capteur est choisi dans le groupe constitué par les résolvers, les résolvers à transformateur tournant, les capteurs réluctants et les capteurs optiques.

Par ailleurs, le programme est conçu pour ajuster la polarité du capteur à celle du moteur.

L'invention sera bien comprise par les explications données ci-après en regard du dessin annexé dans lequel :

- la figure 1 est un diagramme vectoriel montrant la marche d'un moteur synchrone avec une avance de phase de 90 degrés,

- la figure 2 est une vue en coupe axiale d'un moteur synchrone à aimants selon l'invention,

- la figure 3 est un schéma synoptique de la commande de l'invention,

- la figure 4 représente des diagrammes puissance-vitesse et couple-vitesse relatifs à un moteur de l'invention avec une commande selon l'invention.

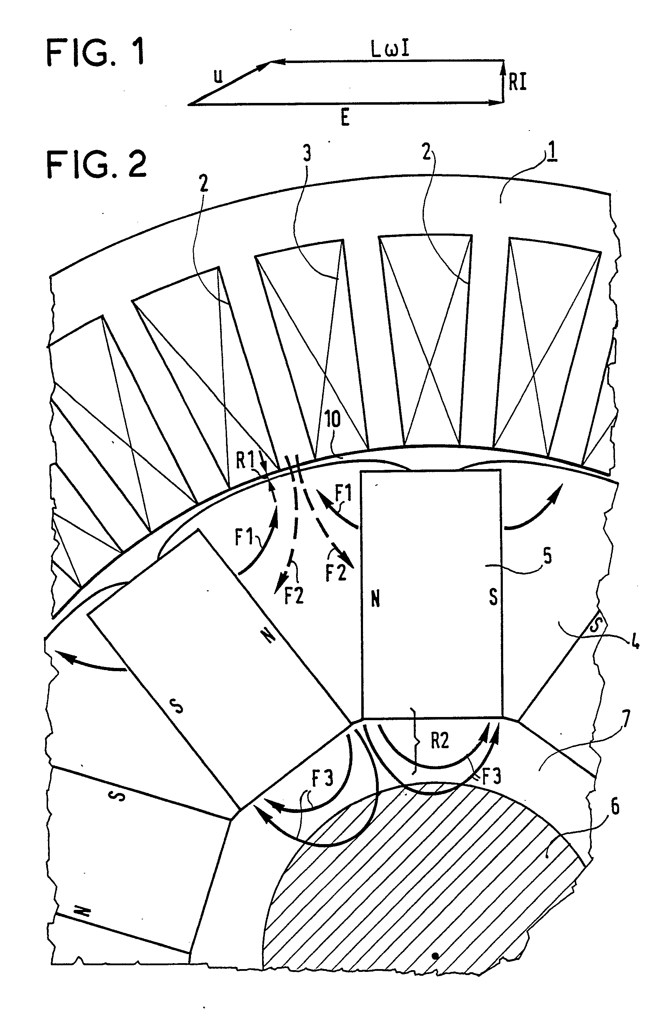

Dans un moteur synchrone à aimants, pour lequel on veut utiliser une avance de phase importante, par exemple 90°, le diagramme vectoriel se présente comme le montre la figure 1, avec :

E = Force électromotrice du moteur

U = Différence de potentiel aux bornes des bobinages du moteur

L, R = Inductance et résistance du moteur.

La force électromotrice E est une caractéristique intrinsèque du moteur.

La différence de potentiel U est imposée par le variateur. Sa valeur est susceptible d'être modifiée selon besoin.

L'inductance L est une caractéristique intrinsèque du moteur.

Le courant I est une résultante.

Pour obtenir une plage de fonctionnement égale ou supérieure à 4 il faut que l'amplitude du vecteur U puisse atteindre une valeur 4 fois plus faible que l'amplitude du vecteur E, c'est-à-dire que l'amplitude du vecteur Lωl (en négligeant la valeur du vecteur RI qui reste faible) puisse atteindre environ les 3/4 de l'amplitude du vecteur E.

Ce qui signifie, qu'à une vitesse donnée, ces conditions étant respectées, la valeur du courant I reste à l'intérieur des limites permises par le moteur.

- Il est donc à prévoir une construction de moteur telle que la self inductance interne vérifie ces conditions sans adjonction d'une self inductance extérieure au moteur et en série avec celui-ci.
- Si une valeur minimale de self inductance devait être obtenue par l'addition d'une self extérieure au moteur, on réduirait bien le courant à la valeur souhaitée mais cette solution conduirait à deux inconvénients importants : a/ Des tensions trop élevées aux normes des bobinages du moteur.

b/ Des pertes fer rédhibitoires au fonctionnement à vitesse élevée. - Le vecteur Lωl devant prendre des valeurs supérieures ou égales aux 3/4 du vecteur E, le vecteur U est nécessairement petit devant le vecteur E. Ce vecteur est représentatif du flux résultant des actions, dans les bobinages stator, du courant I et du flux des aimants et le vecteur E est représentatif du flux créé par les aimants du rotor seuls dans le stator (en absence de courant dans les bobinages stator). Cette réduction du flux magnétique créé par le stator sous l'action du courant, peut provoquer un recul des aimants du rotor et les conduire au voisinage du seuil de désaimantation.

Dans ces conditions, si un second circuit de circulation du flux magnétique des aimants n'est pas prévu, ces derniers devront travailler à la limite de désaimantation, situation précaire quant aux performances et à la fiabilité du moteur.

Le moteur synchrone à aimants proposé pour ce fonctionnement est constitué d'un stator et d'un rotor, ledit rotor étant construit de telle façon que, lorsque l'avance de phase atteint des valeurs importantes et le courant I des niveaux élevés, la présence du vecteur Lωl provoque la circulation d'une grande partie du flux des aimants dans la partie centrale du rotor ce qui supprime le risque de désaimantation. Un exemple de moteur selon l'invention est représenté dans la figure 2.

La référence 1 désigne une carcasse statorique munie d'encoches 2 dans lesquelles sont disposés des bobinages 3.

La référence 4 désigne les tôles du rotor, découpées et assemblées pour définir des logements dans lesquels sont placés des aimants 5. La direction d'aimantation des aimants est azimutale, c'est-à-dire perpendiculaire à l'axe du moteur et sensiblement perpendiculaire à un plan radial passant par l'aimant. La référence 6 désigne l'arbre de la machine et la référence 7 une pièce de liaison entre les tôles rotoriques et l'arbre.

On désigne par 10 l'entrefer entre le rotor et le stator.

La flèche F1 représente le flux magnétique émis par l'aimant tandis que la flèche F2 représente le flux magnétique créé par les bobinages 3. On voit que la configuration du moteur de l'invention ne risque pas de désaimanter les aimants, car le flux des aimants trouve à se refermer en empruntant un chemin de repli désigné par la flèche F3, du côté de l'arbre du moteur. La Demanderesse a observé que le fonctionnement était optimal en donnant au chemin de repli du flux magnétique des aimants une réluctance R2 comprise entre 10 et 20 fois la réluctance R1 offerte au flux des aimants du côté de l'entrefer 10. L'homme du métier saura aisément choisir la nature et l'épaisseur du matériaux de la pièce de liaison 7 permettant de réaliser les conditions ci-dessus.

La définition du rotor conduit à vérifier une valeur de self inductance interne L telle que, pour un rapport

$$\frac{Nmax}{N_o} \geq 4$$

et à la vitesse maximale, le courant I reste à l'intérieur des limites fixées pour le moteur.

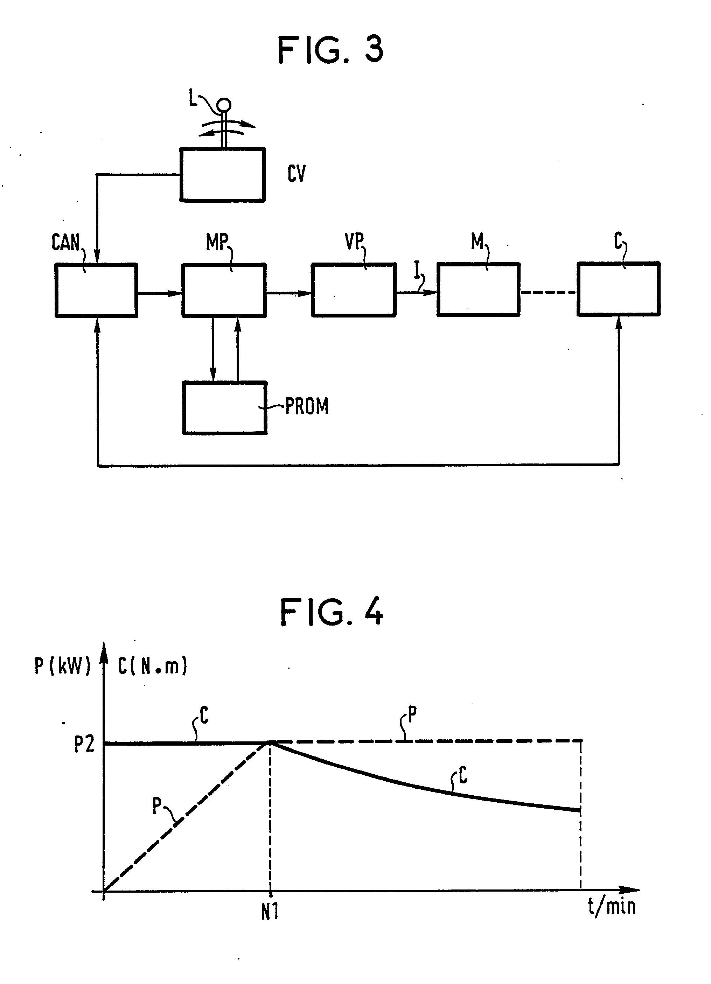

La figure 3 illustre la commande de l'invention.

La référence M désigne le moteur synchrone, tel qu'il a été défini ci-dessus.

Le moteur est associé à un capteur C de la position du rotor ; ce capteur est du type résolver, de préférence à transformateur tournant (sans balais). En variante, le capteur peut être un codeur optique, ou un capteur réluctant et plus généralement tout capteur donnant des informations de position de précision suffisante. Le moteur est alimenté par un variateur électronique de puissance VP, qui fournit un courant fonction de la puissance exigée du moteur.

L'opérateur dispose d'une commande de vitesse CV, munie par exemple d'un levier de manoeuvre L (en variante, d'un clavier) et élaborant un signal fonction de la vitesse désirée.

Ce signal est numérisé par un convertisseur analogique numérique CAN et adressé à un microprocesseur MP ; ce dernier reçoit par ailleurs le signal de position du rotor du moteur numérisé par le convertisseur analogique numérique CAN ainsi qu'un signal relatif à l'écart entre la vitesse actuelle du moteur et la vitesse désirée. Le microprocesseur dispose en outre d'informations préalablement enregistrées dans une mémoire PROM ; ces informations sont élaborées pour permettre de maintenir un déphasage nul entre le courant 1 envoyé par le variateur de puissance dans les phases du stator du moteur et la différence de potentiel U aux bornes des phases du moteur.

Cette disposition permet la réduction de la puissance réactive circulant dans le variateur électronique de puissance et par conséquent, permet d'optimiser le calibre en volts-ampères du variateur en regard de la puissance mécanique souhaitée sur l'arbre du moteur.

La différence de potentiel U est constituée par la force électromotrice du moteur E combinée à l'action du courant I sur la résistance R, et l'inductance L des bobinages stator du moteur.

On notera que le programme du microprocesseur est réalisé pour adapter la polarité du capteur à celle du moteur.

La commande de l'invention permet d'obtenir un fonctionnement d'un moteur selon les diagrammes de la figure 4.

La puissance absorbée par le moteur croît avec la vitesse jusqu'à une valeur donnée N1, le couple étant constant.

Au delà de cette valeur de vitesse, la puissance reste constante, le couple diminuant.

## Revendications

1/ Moteur synchrone à aimants du type à concentration de flux, comprenant un rotor muni d'aimants positionnés radialement au sein du rotor avec une direction d'aimantation azimutale, caractérisé en ce que la valeur (R2) de la réluctance offerte au flux des aimants du côté de l'arbre (6) du moteur est comprise entre 10 fois et 20 la valeur de la réluctance offerte au flux des aimants du côté de l'entrefer (10) du moteur.

2/ Commande pour la marche à puissance constante d'un moteur selon la revendication 1, ledit moteur synchrone étant associé à un capteur (C) mesurant la position de son rotor et à un variateur de puissance se comportant en générateur de courant (VP), caractérisé en ce que le variateur (VP) est commandé par un microprocesseur (MP) programmé recevant une information de la vitesse désirée du moteur (M), une information de l'écart entre la vitesse actuelle et la vitesse désirée du moteur, une information en provenance dudit capteur et relative à la position du rotor du moteur et une information mémorisée pour permettre un déphasage nul entre le courant I fourni par le variateur de puissance et la différence de potentiel U aux bornes des phases du moteur, ces dispositions permettant de minimiser la puissance installée dans le variateur pour un pilotage à puissance constante du moto-variateur synchrone.

3/ Commande selon la revendication 2, caractérisée en ce que le capteur est choisi dans le groupe constitué par les résolvers, les résolvers à transformateur tournant, les capteurs réluctants et les capteurs optiques.

4/ Commande selon l'une des revendications 2 et 3, caractérisée en ce que le programme est conçu pour ajuster la polarité du capteur à celle du moteur.

# FIG. 1

$L\omega I$

$u$

$RI$

$E$

# FIG. 2

# FIG. 3

# FIG. 4

Office européen
des brevets

RAPPORT DE RECHERCHE EUROPEENNE

Numero de la demande

EP    90 10 0361
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | FR-A-2016516 (SIEMENS)<br>* page 1, lignes 26 - 33 *<br>* page 3, lignes 5 - 13; figure 4. *<br>--- | 1. | H02K21/14<br>H02P5/40<br>H02K1/27 |
| A | US-A-4568846 (KAPADIA)<br>* colonne 6, ligne 54 - colonne 7, ligne 2; figure 2. *<br>--- | 1. | |
| A | DE-A-1563040 (SIEMENS)<br>* page 1, lignes 1 - 3 *<br>* page 3, ligne 4 - page 4, ligne 7; figures 1, 2. *<br>--- | 1. | |
| A | IEEE TRANSACTIONS ON INDUSTRIAL ELECTRONICS AND CONTROL<br>vol. 27, no. 3, août 1980, New York US<br>pages 196 - 201; F. HARASHIMA ET AL:<br>"A MICROPROCESSOR-BASED PLL SPEED CONTROL SYSTEM CONVERTER-FED SYNCHRONOUSMOTOR"<br>* pages 196 - 201 *<br>--- | 2. | |
| D,A | PROCEEDINGS OF THE IEEE<br>vol. 70, no. 2, février 1982, New York US<br>pages 116 - 135; B.K. BOSE:<br>"ADJUSTABLE SPEED AC DRIVES - A TECHNOLOGY STATUS REVIEW"<br>* pages 131 - 133 *<br>--- | 2. | DOMAINES TECHNIQUES RECHERCHES (Int. Cl.5 )<br><br>H02K<br>H02P<br>B60L |
| A | PESC '88 RECORD 19th ANNUAL IEEE POWER ELECTRONICS SPECIALISTS CONFERENCE<br>vol. 1, avril 1988, Kyoto JP<br>pages 409 - 414; Y. TAKEDA ET AL:<br>"CURRENT PHASE CONTROL METHODS FOR PERMANENT MAGNET SYNCHRONOUS MOTORS CONSIDERING SALIENCY"<br>* page 1; figure 1. *<br>--- | 2. | |
| A | EP-A-0133580 (ONO SOKKI)<br>* figure 1. *<br>--- | 2. | |
| | -/-- | | |

Le présent rapport a été établi pour toutes les revendications

| Lieu de la recherche | Date d'achèvement de la recherche | Examinateur |
|---|---|---|
| LA HAYE | 28 FEVRIER 1990 | TIO K.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P0402)

Office européen
des brevets

RAPPORT DE RECHERCHE EUROPEENNE

Numero de la demande

EP    90 10 0361
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | PATENT ABSTRACTS OF JAPAN<br>vol. 7, no. 136 (E-181)(1281) 14 juin 1983,<br>& JP-A-58 049091 (FUJITSU FANUC) 23 mars 1983,<br>* le document en entier *<br>----- | 2. | |
| | | | **DOMAINES TECHNIQUES RECHERCHES (Int. Cl.5 )** |

Le présent rapport a été établi pour toutes les revendications

| Lieu de la recherche | Date d'achèvement de la recherche | Examinateur |
|---|---|---|
| LA HAYE | 28 FEVRIER 1990 | TIO K.H. |